(19) Europäisches Patentamt
European Patent Office
Office européen des brevets

(11) Veröffentlichungsnummer: **0 549 923 A2**

(12) **EUROPÄISCHE PATENTANMELDUNG**

(21) Anmeldenummer: **92120891.4**

(22) Anmeldetag: **08.12.92**

(51) Int. Cl.5: **H01B 3/30**, C08J 5/24, C08L 79/08, //(C08L79/08,79:08)

(30) Priorität: **11.12.91 DE 4140738**

(43) Veröffentlichungstag der Anmeldung: **07.07.93 Patentblatt 93/27**

(84) Benannte Vertragsstaaten: **DE FR GB IT**

(71) Anmelder: **Herberts Gesellschaft mit beschränkter Haftung**
**Christbusch 25**
**W-5600 Wuppertal 2(DE)**

(72) Erfinder: **Winkler, Diethard**
**Hagener Strasse 35**
**W-5600 Wuppertal 22(DE)**
Erfinder: **Grüne, Ulrike**
**Kondorweg 23**
**W-5600 Wuppertal(DE)**

(74) Vertreter: **Türk, Gille, Hrabal, Leifert**
**Brucknerstrasse 20**
**W-4000 Düsseldorf 13 (DE)**

(54) **Härtbare Masse, Verfahren zu deren Herstellung und deren Verwendung zur Fixierung von Wickelgütern.**

(57) 2.1. Härtbare Massen zur Fixierung von Wickelgütern weisen unbefriedigende Elastizität bei gleichzeitiger Wärmebeständigkeit auf. Dies soll vermieden werden.

2.2. Die härtbaren Massen enthalten 20-80 Gew.-Teile $\alpha,\beta$-ethylenisch ungesättigtes Polyesterimid und 80-20 Gew.-Teile copolymerisierbare Monomere. Das $\alpha,\beta$- ethylenisch ungesättigte Polyesterimid ist ein Reaktionsprodukt aus mindestens einer $\alpha,\beta$-ethylenisch ungesättigten Dicarbonsäure, ihrem Anhydrid oder Ester, mindestens einem Polyetherpolyol mit einem Zahlenmittel der Molmasse von 600-30000 in einer Menge von 2-80 Gew.-% bezogen auf das fertiggestellte ungesättigte Polyesterimid, einer mindestens einen 5-gliedrigen cyclischen Imidring enthaltenden Verbindung, wobei der Gehalt an Imidstoff bezogen auf das Polyesterimidharz mindestens 0,5 Gew.-% beträgt, gegebenenfalls weiteren Carbonsäuren, weiteren Alkoholen und Polyisocyanaten. Das ungesättigte Polyesterimidharz weist eine OH-Zahl unter 70 und eine Säurezahl unter 50 sowie einen Urethangruppengehalt von 0-0,05 Äquivalenten bezogen auf 100 g auf.

EP 0 549 923 A2

Die Erfindung betrifft härtbare Massen auf der Basis ungesättigter Polyesterimidharze aus α,β-ethylenisch ungesättigten Dicarbonsäuren, bestimmten Polyetherpolyolen sowie imidhaltigen Verbindungen, die sich zur Herstellung von elastischen Überzügen mit hoher Wärmebeständigkeit und guter Haftung eignen. Sie sind besonders geeignet zur Fixierung von Wickelgütern, können jedoch auch für andere Zwecke, wie die Imprägnierung von Geweben, eingesetzt werden.

Die Verwendung niedrigviskoser Lösungen von ungesättigten Polymeren als Tränk-, Träufel- oder Gießharze zur Verfestigung und Fixierung von Wickelgütern, insbesondere von elektrischen Wicklungen und zum Verguß von elektronischen Bauteilen wird in der Literatur beschrieben. Für diesen Zweck können verschiedene Harze eingesetzt werden. So beschreibt die offengelegte DE-A-16 69 714 Mischungen ungesättigter, imidfreier Polyester mit hochmolekularen Polyetherdiolen, wobei letztere zur Viskositätserhöhung dienen. Derartige Produkte weisen eine unzureichende Wärmebeständigkeit auf, die gerade bei Wickelgütern für elektrische Anwendungszwecke, die häufig während des Betriebs heiß werden, wichtig ist. In der offengelegten EP-A-0 102 487 werden ungesättigte imidhaltige Polyester beschrieben, die ein lineares Esterdiol mit mittlerem Molekulargewicht von 700-1200 enthalten und aufgrund ihres strukturviskosen Verhaltens Abtropfverluste bei Applikation und Aushärtung vermindern. Derartige Materialien besitzen nicht die gewünschte Elastizität und Haftung.

In der offengelegten DE-A-15 70 273 (sowie auch DE-A-17 70 386 und DE-A-24 60 768) werden niedrigviskose Lösungen von imidhaltigen ungesättigten Polyestern, sogenannten ungesättigten Polyesterimiden, in copolymerisierbaren Monomeren beschrieben. Diese können in der Elektrotechnik als Tränk-, Träufel- oder Gießharze zur Verfestigung und Fixierung von elektrischen Wicklungen sowie zum Verguß von elektronischen Bauteilen verwendet werden. Die Vergußmassen besitzen zwar gute elektrische Werte und eine hohe Härte, lassen jedoch hinsichtlich ihrer Elastizitäts- und Haftungseigenschaften zu wünschen übrig. Die mangelnde Elastizität führt oftmals zur Rißbildung während oder nach der Aushärtung. Sie wirkt sich besonders nachteilig aus auf Umhüllungen oder Zuleitungen von Drahtspulen, die in solche Vergußmassen eingebettet sind. Eine häufige Biegebeanspruchung bei der späteren Verwendung führt ebenfalls zur Rißbildung, bis hin zum Abplatzen der Isolierung und Fixierung. Nach der DE-A-15 70 273 können die ungesättigten Polyesterimidharze auch langkettige aliphatische Dicarbonsäuren, wie Adipinsäure oder polymere Fettsäuren enthalten. Man erhält dabei Produkte, die zwar eine gute Elastizität aufweisen, jedoch bei Temperaturbelastung unerwünscht hohe Gewichtsverluste erleiden.

In der offengelegten DE-A-28 56 050 werden zur Elastifizierung von imidgruppenhaltigen Tränkharzen ungesättigte Öle beschrieben. Auch hierbei kann die Elastizität jedoch nicht ausreichend gesteigert werden, ohne die thermische Stabilität in unerwünschtem Maße zu verschlechtern.

Aufgabe der Erfindung ist daher die Bereitstellung von härtbaren Massen, die beispielsweise zur Fixierung von Wickelgütern geeignet sind und bei guter Haftung eine verbesserte Elastizität bei gleichzeitig guter Wärmestabilität aufweisen.

Im Rahmen der Erfindung hat es sich überraschenderweise gezeigt, daß bestimmte ungesättigte Polyesterimidharze auf der Basis von α,β-ungesättigten Dicarbonsäuren, Polyetherpolyolen und imidhaltigen Verbindungen, dazu geeignet sind, diese Aufgabe zu lösen. Einen Gegenstand der Erfindung bildet daher eine härtbare zur Fixierung von Wickelgütern geeignete Masse, enthaltend

A) 20 bis 80 Gew.-% eines oder mehrerer α,β-ungesättigter Polyesterimidharze auf der Basis von ungesättigten Dicarbonsäuren, Polyolen und Imiden mit fünfgliedrigen, cyclischen Imidringen, und

B) 80 bis 20 Gew.-% eines oder mehrerer, mit den ungesättigten Polyesterimidharzen (A) copolymerisierbarer Monomerer,

sowie gegebenenfalls übliche Hilfs- und Zusatzstoffe, die dadurch gekennzeichnet ist, daß die α,β-ethylenisch ungesättigten Polyesterimidharze (A)

- eine OH-Zahl unter 70 und eine Säurezahl unter 50, bevorzugt unter 30, und
- einen Urethangruppengehalt von 0 bis 0,05 pro 100 g, aufweisen
- und erhältlich sind durch Umsetzung von:

a) mindestens einer α,β-ethylenisch ungesättigten Dicarbonsäure, ihrem Anhydrid und/oder einem Ester davon,

b) mindestens einem Polyetherpolyol mit einem Zahlenmittel der Molmasse (Mn) von 600 bis 30000 und mit der allgemeinen Formel

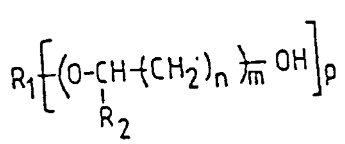

I

worin

- $R_1$ ein aliphatischer, cycloaliphatischer, heterocyclischer, aromatischer, oder aliphatisch-aromatischer Rest mit 1-20 C-Atomen, der auch O- oder N-Atome enthalten kann, ist;
- $R_2$ Wasserstoff oder ein Alkylrest mit 1-4 C-Atomen ist,
- n = 1 - 3,
- m = eine ganze Zahl von 10 bis 390,
- p = 2 - 4,

c) mindestens einer imidhaltigen Verbindung der allgemeinen Formel

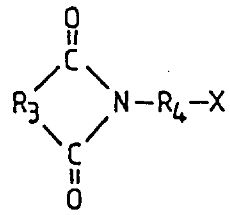

II

oder

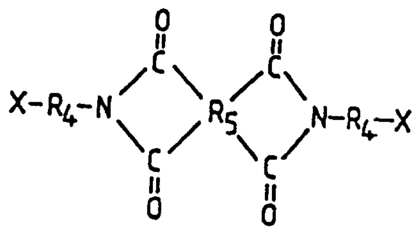

III

oder

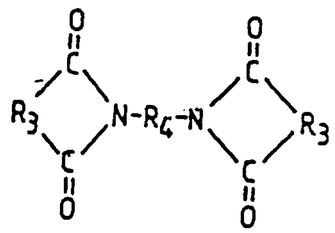

IV

worin

- $R_3$ ein aliphatischer, cycloaliphatischer oder aromatischer Rest, an dem die Carbonylgruppen in 1,2-Stellung zueinander stehen und der zumindest eine weitere reaktionsfähige Carboxyl- oder Hydroxylgruppe oder eine C = C-Doppelbindung aufweist, ist
- $R_4$ ein aliphatischer, cycloaliphatischer, heterocyclischer oder aromatischer Rest mit 2-20 C-Atomen, der auch O- oder N-Atome enthalten kann, ist,
- $R_5$ ein aliphatischer, cycloaliphatischer oder aromatischer Rest, an dem jeweils zwei der vier Carbonylgruppen in 1,2-Stellung zueinander stehen, ist
- X eine Hydroxyl- oder Carboxylgruppe ist, sowie

d) gegebenenfalls einer oder mehreren von der Komponente a) unterschiedlicher Mono-, Di- oder Tricarbonsäuren,

e) gegebenenfalls einem oder mehreren von Polyetherpolyolen unterschiedlichen Alkoholen und

f) gegebenenfalls einem oder mehreren Polyisocyanaten,

wobei die Mengen der Reaktionskomponenten a) bis f) so gewählt sind, daß

- 100 g der Komponente (A) 0,05-0,40 Mol polymerisationsfähiger $\alpha,\beta$-ethylenisch ungesättigter Reste aus der Komponente (a) enthalten

- die Gesamtmenge des Polyetherpolyols (b) bezogen auf (A) 2-80 Gew.-% beträgt,
- auf jede Hydroxylgruppe des Polyetherpolyols (b) mindestens 1 α,β-ethylenisch ungesättigter Rest aus der Komponente (a) entfällt, und
- der Gehalt an Imidstickstoff bezogen auf (A) mindestens 0,5 Gew.-%, bevorzugt mindestens 1,5 Gew.-%, beträgt, und
- das Zahlenmittel der Molmasse der Komponente (A) 600 bis 5000 beträgt.

Ein weiterer Gegenstand der Erfindung betrifft die Herstellung der erfindungsgemäßen härtbaren Massen und insbesondere deren darin enthaltenen Polyesterimidharze.

Für die Herstellung der ungesättigten Polyesterimide (A) geeignete α,β-ethylenisch ungesättigte Dicarbonsäuren (a) sind beispielsweise solche mit 4 oder 5 C-Atomen. Sie können auch in Form ihrer Anhydride oder ihrer Ester, wie beispielsweise niedrig-Alkylester (mit 1 bis 4 C-Atomen) eingesetzt werden. Beispiele sind Maleinsäureanhydrid (MSA), Fumarsäure, Citraconsäureanhydrid oder Mesaconsäure. Bevorzugt wird Maleinsäureanhydrid eingesetzt.

Durch den Gehalt der ungesättigten Dicarbonsäuren im ungesättigten Polyesterimid werden dessen Vernetzungsdichte und damit Eigenschaften wie Härte, Elastizität, Oberflächenbeschaffenheit, Lösungsmittelbeständigkeit, wesentlich beeinflußt. Ihr Anteil wird so gewählt, daß 100 g des ungesättigten Polyesterimids (A) 0,05 bis 0,40 Mol polymerisationsfähiger α,β- ethylenisch ungesättigter Reste (a) enthalten und auf jede Hydroxylgruppe des Polyetherpolyols (b) mindestens ein Rest (a) entfällt. Tränkmassen, die zu sehr elastischen Produkten führen, können beispielsweise mit 0,05 bis 0,15 Mol (a) pro 100 g (A) erhalten werden, wohingegen sich mit beispielsweise 0,30 bis 0,40 Mol (a) pro 100 g (A) Massen herstellen lassen, die zu härteren und dennoch wenig zur Rißbildung neigenden ausgehärteten Produkten führen.

Die zur Herstellung der erfindungsgemäßen Massen geeigneten Polyetherpolyole (b) sind beispielsweise Homo- oder Copolymerisate, sowie Polyadditionsprodukte von cyclischen Monomeren mit Sauerstoff als Ringglied, wie Ethylenoxid und Propylenoxid. Beispiele hierfür sind in "Methoden der Organischen Chemie", 4. Auflage, Band XIV/2, Seiten 425-453, Georg Thieme-Verlag, Stuttgart, 1963 beschrieben.

Ein Beispiel für ein geeignetes Homopolymerisat ist Polyethylenglykol der folgenden Formel

$$HO\{CH_2-CH_2-O\}_{m1}\ CH_2-CH_2\{O-CH_2-CH_2\}_{m2}\ OH$$

worin m1 und m2 so gewählt sind, daß die gewünschten Molekulargewichte erzielt werden.

Weitere Beispiele sind Polypropylenglykol, sowie gemischte Polyethylen-Polypropylenglykole. Ein weiteres Beispiel ist Polytetrahydrofuran.

Geeignete Polyadditionsprodukte sind beispielsweise die Reaktionsprodukte von Ethylenoxid und/oder Propylenoxid

- entweder an polyfunktionelle Alkohole mit 2 bis 4 Hydroxylgruppen, wie Glyzerin, Trimethylolethan, Trimethylolpropan, Triethanolamin oder Pentaerythrit, beispielsweise der folgenden allgemeinen Formel

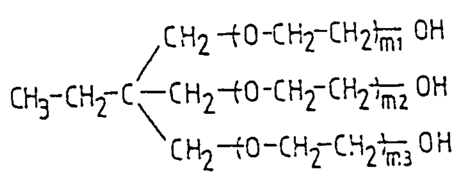

  worin m1, m2 und m3 wieder so gewählt sind, daß die angestrebten Molekulargewichte erzielt werden,
- oder an polyfunktionelle Phenole mit 2-4 OH-Gruppen, wie Brenzkatechin, Hydrochinon, Bisphenol-A oder Bisphenol-F.

Die Polyetherpolyole (b) weisen Zahlenmittel der Molmasse (Mn) von 600 bis 30000, bevorzugt von 1000 bis 6000 auf. Sie werden in einer derartigen Menge eingesetzt, daß ihr Gehalt im ungesättigten Polyesterimid (A) 2 - 80 Gew.-%, bevorzugt 10 - 60 Gew.-% beträgt.

Selbstverständlich können Mischungen verschiedener Polyetherpolyole verwendet werden. Ein bevorzugtes Polyetherpolyol ist Polyethylenglykol.

Als imidhaltige Verbindungen (c) lassen sich beispielsweise Monoalkohole, Diole, sowie Mono- und Dicarbonsäuren mit 5-gliedrigen cyclischen Imidringen verwenden. Derartige imidhaltige Verbindungen sind dem Fachmann geläufig. Sie werden beispielsweise in der DE-A-15 70 273 und der DE-A-32 29 639

beschrieben. Sie können in bekannter Weise hergestellt und isoliert werden. Es ist jedoch auch möglich, und erfindungsgemäß bevorzugt, sie während der Herstellung des ungesättigten Polyesterimids (A) herzustellen und ohne Isolierung weiterzuverarbeiten. Der Anteil an imidhaltiger Verbindung (c) wird so gewählt, daß der Gehalt an Imidstickstoff, bezogen auf die Komponente (A), mindestens 0,5 Gew.-%, bevorzugt mindestens 1,5 Gew.-% beträgt.

Beispiele für die imidhaltigen Verbindungen (c) sind

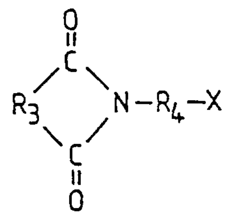

II.

nämlich Umsetzungsprodukte von Tricarbonsäuren bzw. deren Anhydriden wie Trimellithsäureanhydrid (TMA), Benzophenontricarbonsäureanhydrid, Tricarballylsäure oder ungesättigten cycloaliphatischen Dicarbonsäuren bzw. deren Anhydriden wie Tetrahydrophthalsäureanhydrid (THPSA), Endomethylentetrahydrophthalsäureanhydrid oder Maleinsäureanhydrid (MSA) mit aliphatischen, cycloaliphatischen, heterocyclischen oder aromatischen Aminoalkoholen oder Aminocarbonsäuren. Geeignete Aminoalkohole sind beispielsweise Ethanolamin, Propanolamin, Butanolamin, ihre höheren Homologen, 4-Aminocyclohexanol, 4-Aminobenzylalkohol sowie im Kern aminierte Phenyletheralkohole. Geeignete Aminocarbonsäuren sind z.B. Aminoessigsäure, Aminopropionsäure, Aminocapronsäure und 4-Aminobenzoesäure.

Weitere Beispiele sind Umsetzungsprodukte der Formel III von Tetracarbonsäuren

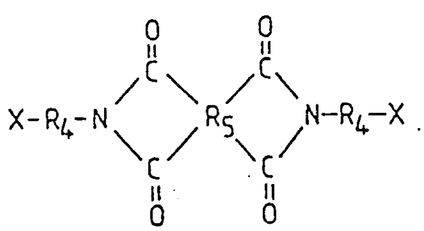

III.

oder deren Anhydriden wie Pyromellithsäuredianhydrid, Benzophenontetracarbonsäuredianhydrid, Butantetracarbonsäuredianhydrid, Cyclopentantetracarbonsäuredianhydrid mit aliphatischen, cycloaliphatischen, heterocyclischen oder aromatischen Aminoalkoholen oder Aminocarbonsäuren.

Weiterhin geeignet sind Umsetzungsprodukte der Formel IV von 2 Mol

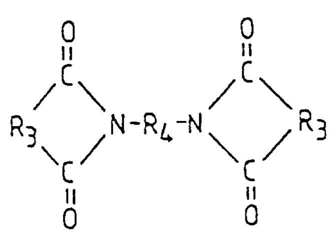

IV.

Tricarbonsäure oder deren Anhydrid wie Trimellithsäureanhydrid (TMA), 3,3',4-Benzophenontricarbonsäureanhydrid mit 1 Mol aromatischem Diamin wie 4,4'-Diaminodiphenylmethan, 4,4'-Diaminodiphenylether oder aliphatischen Und cycloaliphatischen Diaminen wie 4,4'-Diaminodicyclohexylmethan, Ethylendiamin, Propylendiamin oder aliphatischen Etherdiaminen. Statt der Diamine lassen sich auch die entsprechenden Diisocyanate für die Herstellung verwenden und statt der Anhydride die entsprechenden Carbonsäuren.

Bevorzugte imidhaltige Verbindungen (c) sind die Umsetzungsprodukte von THPSA bzw. TMA mit Monoethanolamin:

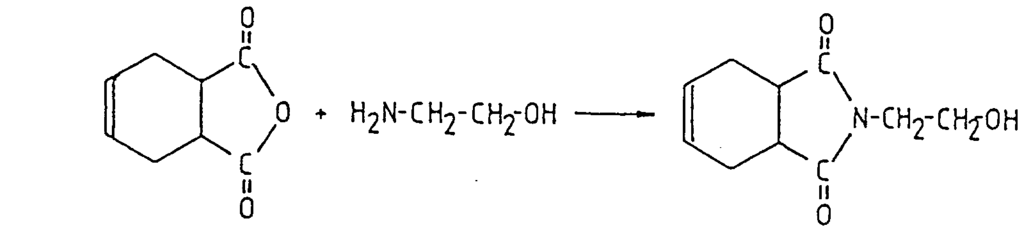

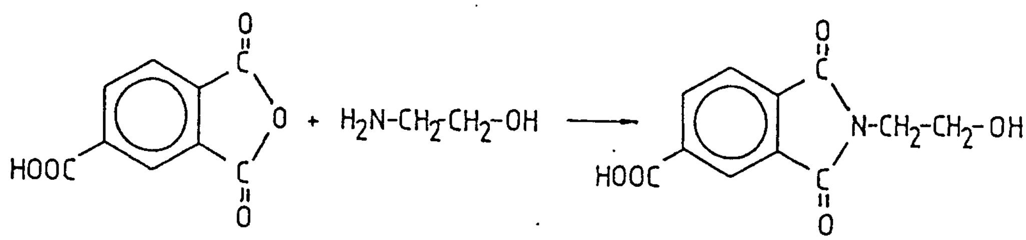

Zur Herstellung der erfindungsgemäß verwendbaren ungesättigten Polyesterimide (A) können gegebenenfalls auch zusätzlich zu den α,β-ungesättigten Dicarbonsäuren der Komponente (a) weitere Carbonsäuren (d) zugesetzt werden. Derartige verwendbare zusätzliche Carbonsäuren (d) sind gesättigte und ungesättigte cycloaliphatische oder aromatische Mono-, Di- und Tricarbonsäuren, die auch in Form ihrer Anhydride oder ihrer Ester, insbesondere Alkylester mit 1-4 C-Atomen im Alkylteil, eingesetzt werden können. Beispiele sind Dicyclopentadienmaleinat, Tetrahydrophthalsäureanhydrid (THPSA), Endomethylentetrahydrophthalsäureanhydrid,Trimellithsäureanhydrid (TMA), Terephthalsäure (TPS) und Isophthalsäure (IPS). Um schwer entflammbare Massen herzustellen, können zum Beispiel Tetrachlorphthalsäure oder Hexachlorphthalsäure verwendet werden. Bevorzugt wird Tetrahydrophthalsäureanhydrid verwendet. Aliphatisch gesättigte Polycarbonsäuren wie Adipinsäure, Sebacinsäure oder polymere Fettsäuren werden nicht verwendet.

Zur Herstellung der erfindungsgemäß verwendbaren ungesättigten Polyesterimide (A) können neben der Polyetherpolyolkomponente (b) auch weitere Alkohole (e) gegebenenfalls verwendet werden. Beispiele hierfür sind von Polyetherpolyolen unterschiedliche mono-, di- oder trifunktionelle Alkohole mit 2 bis 18 C-Atomen, wie 8(9)-Hydroxytricyclo[5.2.1.$0^{2.6}$]dec-3-en, 1,4-Bis-hydroxymethylcyclohexan, 2,2-Bis-(4-hydroxycyclohexyl)-propan, Neopentylglykol (NPG), Trimethylolpropan (TMP) und Trishydroxyethylisocyanurat (THEIC). Das bevorzugte Diol ist Neopentylglykol.

Durch Mitverwendung von Triolen, wie TMP oder THEIC können verzweigte, ungesättigte Polyesterimide mit erhöhter Festigkeit erhalten werden.

Die erfindungsgemäß eingesetzten ungesättigen Polyesterimide (A) können` auch unter Verwendung von Polyisocyanatkomponente (f) hergestellt werden. Hierzu werden bevorzugt die ungesättigten Polyesterimide nach ihrer Herstellung mit Polyisocyanat (f) umgesetzt. Dies kann beispielsweise in der Schmelze geschehen, oder aber nach dem Lösen in der Monomerkomponente (B). Geeignete Polyisocyanate sind solche mit mindestens zwei freien Isocyanatgruppen, beispielsweise aliphatische, cycloaliphatische oder aromatische Diisocyanate mit 6 bis 18 C-Atomen, wie beispielsweise 1,6-Hexamethylendiisocyanat (HMDI), 2,4'-und 4,4'-Dicyclohexylmethandiisocyanat, 3-Isocyanatomethyl-3.5.5.-trimethyl-cyclohexylisocyanat (IPDI), 2.2.3- und 2.4.4-Trimethyl-hexamethylendiisocyanat, Cyclohexanon 1,3- und 1,4-diisocyanat, 2,4- und 2,6-Toluylendiisocyanat (TDI), 2,4'- und 4,4'-Diphenylmethandiisocyanat (MDI). Die Umsetzung mit dem Polyisocyanat kann durchgeführt werden, um z. B. eine Viskositätserhöhung zu erzielen.

Weiterhin kommen Polyisocyanate in Betracht, wie sie z.B. in "Methoden der Organischen Chemie", 4. Auflage, Band XIV/2, S. 64-70, Georg Thieme-Verlag, Stuttgart, 1963 beschrieben sind:

- Umsetzungsprodukte der Polyisocyanate mit einem Unterschuß an Polyalkoholen,
- Trimerisierungsrodukte der Polyisocyanate,
- Umsetzungsprodukte mit Biuretstruktur,
- urethdionhaltige Polyisocyanate.

Bevorzugt werden aromatische Isocyanate wie 2,4'- und 4,4'-Diphenylmethandiisocyanat sowie deren Gemische.

Die gegebenenfalls bei der Herstellung der ungesättigten Polyesterimide (A) mitverwendete Polyisocyanatkomponente (f) wird bevorzugt in einer derartigen Menge eingesetzt, daß der Urethangruppengehalt des fertiggestellten ungesättigten Polyesterimids maximal 0,05 Äquivalente bezogen auf 100 g des fertigen Polyesterimids beträgt.

Die erfindungsgemäß härtbaren Massen enthalten neben dem ungesättigten Polyesterimid (A) mit diesem copolymerisierbare Monomere (B), wobei bevorzugt die ungesättigten Polyesterimide (A) in den copolymerisierbaren Monomeren (B) gelöst sind.

Als copolymerisierbare Monomere (B) eignen sich beispielsweise ethylenisch ungesättigte Verbindungen mit einer oder mehreren vinylischen oder allylischen Doppelbindungen, die radikalisch polymerisierbar sind.

Beispiele für Verbindungen mit Vinylgruppen sind Styrol, Vinyltoluol, p-Methylstyrol, tert-Butylstyrol, Divinylbenzol, N-Vinylpyrrolidon, Hydroxybutylvinylether, Butandioldivinylether und Triethylenglykoldivinylether. Beispiele für Allylverbindungen sind Phthalsäurediallylester, Fumarsäurediallylester, Triallylphosphat, Triallylisocyanurat, Diallylbenzol, Diallylbisphenol A und Pentaerythrit-tri- oder -tetra-allylether.

Weitere geeignete Beispiele sind Acryl- und Methacrylsäureester wie Hydroxyethyl(meth)acrylat, Hydroxypropyl(meth)acrylat, Phenoxyethyl(meth)acrylat, Dicyclopentadien(meth)acrylat, Butandioldi(meth)-acrylat, Hexandioldi(meth)acrylat, Dipropylenglykoldi(meth)acrylat, Trimethylolpropan-Di(meth)acrylat und Tri(meth)acrylat, Pentaerythrit-Di(meth)acrylat und -Tri(meth)acrylat sowie Epoxidharz-(meth)acrylate.

Der hier und im folgenden verwendete Ausdruck (Meth)acryl bedeutet Acryl und/oder Methacryl.

Bevorzugt werden erfindungsgemäß als copolymerisierbare Monomere Styrol, Vinyltoluol, Hexandioldiacrylat und Butandioldiacrylat eingesetzt. Es können auch Monomerengemische verwendet werden.

Bis zu 50 Gew.-% der vorstehend als Beispiele angegebenen copolymerisierbaren Monomeren können aus Monomeren mit polymerisationsfähigen Gruppen bestehen, wie solchen vom Typ der Maleinsäure- oder Fumarsäure-bis-($C_{1-4}$)-alkylester, sowie der Mono- oder Bis-Maleinimide. Monomere vom Typ der Maleinimide werden beispielsweise in den veröffentlichten DE-A-20 40 094, DE-A-27 19 903, DE-A-32 47 058 und EP-A-0 255 802 beschrieben.

Um die erfindungsgemäß eingesetzten ungesättigten Polyesterimide (A) vor unerwünschter vorzeitiger Polymerisation zu schützen, ist es zweckmäßig, vor, während oder nach deren Herstellung einen oder mehrere Polymerisationsinhibitoren zuzusetzen. Derartige Inhibitoren sind z. B. auch die bekannten phenolischen Inhibitoren wie Hydrochinon, Toluhydrochinon, Di-tert.butyl-hydrochinon, p-tert.butylbrenzcatechin, 2,6-Di-tert.butyl-4-methylphenol, Hydroxyanisol oder 2,6-Di-tert.butyl-4-methoxyphenol. Ebenfalls geeignet sind Inhibitoren vom Chinontyp wie p-Benzochinon, Di-tert.butylchinon und 1,4-Naphtochinon oder gehinderte aromatische sowie aliphatische Amine wie N,N'-Diphenyl-p-phenylendiamin, p-Nitrosodimethylanilin und Tetraalkylpiperidine.

Über die Art und Menge der Inhibitoren lassen sich Reaktivität und Lagerstabiliät der erfindungsgemäßen härtbaren Massen den jeweiligen Erfordernissen anpassen. Die Inhibitoren werden dem ungesättigten Polyesterimidharz (A) und/oder dem Monomeren (B) vor dem Lösen von (A) in (B) in Mengen von 0,005-0,1 Gew.-%, vorzugsweise von 0,01-0,05 Gew.-%, bezogen auf die Summe von (A) + (B) zugesetzt. Ein Teil der Inhibitormenge kann jedoch auch bereits bei der Herstellung der erfindungsgemäß eingesetzten Polyesterimidharze (A) eingesetzt werden. Die dazu gegebenenfalls geeignete Inhibitormenge kann gut experimentell ermittelt werden.

Als gut geeignet haben sich auch Kombinationen von Inhibitoren erwiesen. Eine bevorzugte Kombination besteht aus phenolischen Inhibitoren und Chinonderivaten in einer Konzentration von 0,01-0,05 Gew.-%, bezogen auf die Summe von (A) + (B).

Beispiele für weitere geeignete Inhibitoren sind organische Salze oder Komplexe von Metallkationen, wie zum Beispiel Kupfer, Eisen oder Cobalt in Mengen von 2-50 ppm Metall bezogen auf die Summe von (A) + (B). Sie werden bevorzugt in Kombination mit Inhibitoren beispielsweise vom Phenol- oder Chinontyp verwendet, wie in der AT-Patentschrift 294 426 und in den US-Patentschriften 3,028,360 und 3,360,589, beschrieben.

Neben diesen Inhibitoren können auch Costabilisatoren in einer Konzentration von beispielsweise 0,01-1 Gew.-% bezogen auf die Summe von (A) + (B) zugesetzt werden. Beispiele für geeignete Costabilisatoren sind Phosphine, wie Triphenylphosphin sowie Ester der Phosphorigen-Säure wie Triphenylphosphit oder Tris-(nonylphenyl)-phosphit (DE-Patent 1 098 712, DDR-Patent 2 001 36/6). Weitere geeignete Costabilisatoren sind Thioether wie z.B. 2,2'-Thiodiethyl-bis-3-(3,5-di-tert.butyl-4-hydroxidiphenyl)-propionat.

Die erfindungsgemäß eingesetzten ungesättigten Polyesterimide (A) können aus den Ausgangskomponenten nach bekannten Verfahren hergestellt werden, beispielsweise unter Erwärmen, beispielsweise auf Temperaturen von 120-240°C. Es ist möglich, die Komponenten durch Schmelzkondensation, bevorzugt unter Inertgas oder im Azeotrop-Verfahren, gegebenenfalls auch durch Kombination beider Verfahren und gegebenenfalls in Gegenwart von Veresterungskatalysatoren, umzusetzen.

Die Mengenverhältnisse der Komponenten (a) bis (f) werden dabei nach dem Fachmann geläufiger Weise so gewählt, daß auf jede Hydroxylgruppe des Polyetherpolyols (b) mindestens ein $\alpha,\beta$- ethylenisch ungesättigter Rest aus der Komponente (a) entfällt, und daß das Zahlenmittel der Molmasse des ungesättigten Polyesterimidharzes bei 600-5000, bevorzugt 800-3000 liegt.

Die imidhaltigen Verbindungen (c) können vorgebildet sein, oder während des Herstellungsverfahrens erzeugt werden, wie beispielsweise in den veröffentlichten DE-A-15 70 273, 17 70 386 oder 32 29 618 beschrieben.

Nach einer bevorzugten Ausführungsform werden zunächst die imidhaltigen Verbindungen (c) in einer ersten Verfahrensstufe gebildet, und zwar beispielsweise durch Erwärmen von THPSA/TMA + Monoethanolamin im äquivalenten Verhältnis, beispielsweise bei Temperaturen von 120 bis 170°C. In dieser Verfahrensstufe können die Polyetherpolyole (b) sowie die weiteren Alkohole (e) bereits als "Lösungsmittel" zugegen sein; es können gegebenenfalls auch inerte Lösungsmittel verwendet oder mitverwendet werden. In einer zweiten Verfahrensstufe erfolgt dann die Umsetzung nach dem Schmelz- oder Azeotropverfahren mit den Polyetherpolyolen (b), den $\alpha,\beta$- ethylenisch ungesättigten Dicarbonsäuren (a) und/oder deren Anhydriden oder Estern, und gegebenenfalls weiteren Carbonsäuren (d) sowie weiteren Alkoholen (e) unter Steigerung der Reaktionstemperatur, beispielsweise auf 180 bis 210°C unter Wasserabspaltung. Bevorzugt wird bereits vor der zweiten Verfahrensstufe ein Teil der gegebenenfalls verwendeten Polymerisationsinhibitoren zugesetzt. Nach Erreichen der gewünschten Viskosität und Säurezahl können die ungesättigten Polyesterimide mit weiteren Inhibitoren versetzt werden, was bei erhöhter Temperatur, beispielsweise von 80-160°C erfolgen kann und ebenfalls bei erhöhter Temperatur von beispielsweise 80-160°C im Monomeren (B) gelöst werden.

Das ungesättigte Polyesterimid kann, falls eine Viskositätserhöhung erwünscht ist, bereits in der erhaltenen Reaktionsschmelze, beispielsweise bei 90 bis 120°C, oder nach dem Lösen im Monomeren (B), ebenfalls bei erhöhter Temperatur, beispielsweise 50 bis 100°C, mit dem Polyisocyanat (f) umgesetzt werden. Die erforderliche Menge kann über die Hydroxylzahl in üblicher Weise berechnet werden, wird jedoch bevorzugt experimentell ermittelt und bevorzugt so gewählt, daß das Reaktionsprodukt frei von überschüssigen Isocyanatgruppen ist. Die Reaktion wird so lange fortgesetzt, bis der Gehalt an Isocyanatgruppen unter 0,1 Gew.-% abgesunken ist, was beispielsweise dadurch feststellbar ist, daß das IR-Spektrum keine Isocyanatbande mehr anzeigt. Im allgemeinen ist dies beispielsweise nach 1 bis 3 Stunden der Fall.

Die erfindungsgemäß eingesetzten und hergestellten ungesättigten Polyesterimidharze (A) können durch Copolymerisation mit den copolymerisierbaren Monomeren (B) gehärtet werden. Hierzu ist es günstig, vor der Verarbeitung der Massen aus den ungesättigten Polyesterimiden (A) und den Monomeren (B) Polymerisationsinitiatoren zuzusetzen.

Als Polymerisationsinitiatoren eignen sich beispielsweise die in der Technik gebräuchlichen Peroxide, Hydroperoxide und Keton-Peroxide, beispielsweise Benzoylperoxid, Di-tert.-butylperoxid, Dicumylperoxid, tert.-Butylperoxyacetat, tert.-Butylperoxybenzoat, tert.-Butylperoctoat, tert.-Butylhydroperoxid, Cyclohexanonhydroperoxid, Methylethylketonhydroperoxid. Weitere peroxidische Initiatoren sind z. B. auch in "Methoden der organischen Chemie", 4. Auflage Band XIV/1, S. 770-773, Georg Thieme-Verlag, Stuttgart, 1961 beschrieben. Solche Initiatoren werden beispielsweise in Mengen von 0,5-5 Gew.-%, bevorzugt 1-3 Gew.-%, bezogen auf die Summe von (A) + (B) verwendet. Die Härtung kann durch Erwärmen, beispielsweise auf Temperaturen von 80° bis 180°C erfolgen. Die üblichen Härtungszeiten liegen beispielsweise bei 1 min bis 180 min.

Die erfindungsgemäßen Massen können auch einer sogenannten Kalthärtung unterzogen werden. Bei dieser verwendet man neben Peroxid-Initiatoren zusätzlich Beschleuniger, wie tert.-aromatische Amine, oder bevorzugt Metallsalze von beispielsweise Cobalt, Kupfer, Cer oder Vanadium. Ein Beispiel für verwendbare Kombinationen sind beispielsweise 2-4 Gew.-% Methylethylketonperoxid, Cyclohexanonperoxid oder Acetylacetonperoxid, zusammen mit 1-2 Gew.-% Cobaltbeschleuniger (Cobaltgehalt 1 Gew.-%), bezogen auf die Menge der Komponenten (A) und (B).

Statt der peroxidischen Polymerisationsinitiatoren können bei der Wärmehärtung vorteilhaft beispielsweise auch C-C-labile 1,2-substituierte Tetraphenylethane verwendet werden, wie sie beispielsweise von A. Bletzki und W. Krolikowski in Kunststoffe 79 (1980) 9, S. 558-563 oder in den veröffentlichten DE-A-12 16 877, 12 19 224, 21 64 482, 24 44 252 oder 25 45 451 beschrieben werden. Beispiele hierfür sind solche der folgenden allgemeinen Formel

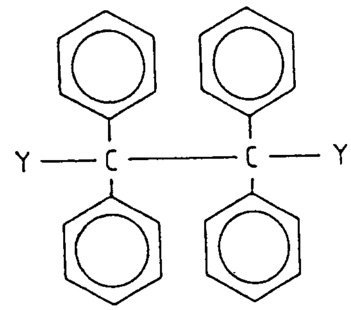

worin Y = $-OH$, $-OCH_3$, $-OC_6H_5$, $-CH_3$, $-CN$, $-NH_2$, $-Cl$, oder $-OSi(CH_3)_3$ bedeuten.

Die erfindungsgemäßen härtbaren Massen können auch durch Strahlungsenergie, beispielsweise durch UV-Strahlung gehärtet werden. Beim Einsatz von UV-Strahlung können geeignete Initiatoren verwendet werden, wie übliche Photoinitiatoren, die im Wellenlängenbereich von 190 bis 400 nm absorbieren. Beispiele für derartige Photoinitiatoren sind chlorhaltige Initiatoren, wie chlorhaltige aromatische Verbindungen, z. B. beschrieben in US-A-4,089,815; aromatische Ketone, wie in US-A-4,318,791 oder EP-A-0 003 002 und EP-A-0 161 463 beschrieben; Hydroxyalkylphenone, wie in US-A-4 347 111 beschrieben; Phosphinoxide, wie in EP-A-0 007 086, EP-A-0 007 508 und EP-A-0 304 783 beschrieben; wasserlösliche Initiatoren, beispielsweise auf der Basis von Hydroxyalkylphenonen, wie in US-A-4,603,097 beschrieben, ungesättigte Initiatoren, wie OH-funktionelle aromatische Verbindungen, die beispielsweise mit Acrylsäure verestert wurden, wie in US-A-3,929,490, EP-A-0 143 201 und EP-A-0 341 560 beschrieben; oder Kombinationen von derartigen Initiatoren, wie beispielsweise in US-A-4,017,652 beschrieben. Bevorzugte Beispiele sind 2-Methoxy-2-hydroxypropiophenon, Benzophenon, Thioxantonderivate, Acylphosphinoxide und Michlers Keton.

Möglich ist auch die Kombination verschiedener Initiatoren. So läßt sich z.B. durch Peroxide mit unterschiedlicher Aktivierungsenergie die entstehende Polymerisationswärme besser verteilen und eine besonders spannungsarme Härtung erreichen. Bei Kombination von Peroxiden oder C-C-labilen Initiatoren mit Photoinitiatoren kann eine vorhergehende UV-Anhärtung Aushärtungsverluste, die bei Warmhärtung infolge von Verdunstung des Monomeren (B) auftreten, wesentlich vermindern.

Die erfindungsgemäßen härtbaren Massen können verschiedene Hilfs- und Zusatzstoffe enthalten, wie sie beispielsweise auf dem Gebiet härtbarer Massen, Tränkharze und Überzugsmittel, geläufig sind.

So können zur Einstellung bestimmter Eigenschaften, wie zum Beispiel der Härtungsgeschwindigkeit, der Oberflächenhärte und der Oberflächenglätte weitere polymerisationsfähige Oligomere, Polymere und/oder Copolymere zugesetzt werden. Beispiele hierfür sind handelsübliche flüssige Polybutadiene oder ihre Derivate, wie zum Beispiel (meth)acryliertes Polybutadien (beispielsweise in US-A 3,652,520 beschrieben), Epoxy(meth)acrylate (beispielsweise in EP-A 0 033 896, EP-A 0 049 922, US-A 3,367,992, US-A 3,066,122, US-A 3,179,623, US-A 3,301,753, US-A 3,256,226, US-A 3,564,074, US-A 3,892,919, US-A 4,407,991, US-A 4,485,123, US-A 4,594,398 beschrieben), Urethan(meth)acrylate (wie beispielsweise in EP-A 0 053 749, EP-A 0 209 684 und US-A 4,162,274 beschrieben), Polyester(meth)acrylate (wie beispielsweise in EP-A 0 083 666 und den veröffentlichten DE-A 38 10 140 und 38 20 294 beschrieben), sowie ungesättigte Polyester und Polyesterimide (wie beispielsweise in den veröffentlichten DE-A 15 70 273 und 17 70 386 beschrieben).

Überraschenderweise hat es sich gezeigt, daß der Zusatz der erfindungsgemäß härtbaren Massen zu anderen härtbaren Systemen, wie sie beispielsweise vorstehend als Zusätze beschrieben wurden, zu einer überraschenden Verbesserung der Elastizität und Haftung derartiger Materialien führt. Erfindungsgemäß ist es daher auch möglich, die erfindungsgemäßen härtbaren Massen als Zusätze zu härtbaren polymerisationsfähigen Oligomeren, Polymeren und Copolymeren zu verwenden, wobei die zugesetzten Mengen in weiten Bereichen, z. B. von 5 - 95 Gew.-% variieren können.

Weitere Zusatzstoffe, die beispielsweise für die erfindungsgemäßen härtbaren Massen geeignet sind, sind faserförmige Verstärkungsmaterialien, wie Kohlenstoff-, Glas-, Polyamid-, Polyester-, Polyacrylnitril- oder Polycarbonatfasern und/oder Füllstoffe, wie zum Beispiel Kreide, Talkum, Aluminiumhydroxid, Quarzmehl, Schiefermehl oder Microdolomit.

Beispiele für übliche Hilfs- und Zusatzstoffe, die außerdem mitverwendet werden können, sind organische und anorganische Pigmente, Farbstoffe, Verlaufsmittel, Thixotropierungsmittel und schwundmindernde Zusätze, wie zum Beispiel gesättigte Polyesterharze, Homo-, Co- und Pfropfpolymerisate des Styrols und seiner Derivate, des Ethylens, des Vinylacetats, der (Meth)acrylsäure und ihrer Ester. Art und Menge derartiger Zusätze richten sich nach dem jeweiligen Anwendungszweck und werden am besten experimentell ermittelt.

Die erfindungsgemäßen härtbaren Massen können für verschiedene Anwendungszwecke eingesetzt werden. Sie eignen sich besonders günstig für die Fixierung von Wickelgütern, insbesondere von gewickelten Drähten, wie Lackdrähten in elektrischen Betriebsmitteln, beispielsweise Rotoren, Statoren oder Transformatoren. Die härtbaren Massen verfestigen sich und schützen die Wickelgüter vor mechanischen sowie chemischen Einwirkungen. Darüber hinaus können auch andere Wickelgüter, beispielsweise auf dem elektrischen Sektor, wie zum Beispiel gewickelte Metallfolien fixiert werden. Ein weiteres Anwendungsgebiet ist die Fixierung von Wickelgütern auf der Basis von Glasfasern, Kunststoffasern und/oder Kunststoffolien. Die erfindungsgemäßen härtbaren Massen sind jedoch nicht auf die Anwendung für derartige Wickelgüter beschränkt. Beispielsweise eignen sie sich auch zur Imprägnierung von Geweben.

Zur Anwendung können die erfindungsgemäßen härtbaren Massen in die zu schützenden Teile bzw. Wickelgüter imprägniert werden. Dies kann nach verschiedenen Verfahren erfolgen, beispielsweise durch Tauchimprägnierung, Vakuumimprägnierung oder Träufelimprägnierung.

Bei der Tauchimprägnierung dienen die erfindungsgemäßen härtbaren Massen als Tränkharze. Dabei wird das zu imprägnierende Gut unter Einhaltung von beispielsweise durch Vorversuche ermittelten Tauchzeiten in das Tränkharz eingetaucht oder im Durchlaufverfahren durch das Tränkharz gezogen.

Bei der Vakuumimprägnierung wird zunächst das zu tränkende Gut in einem Vakuumbehälter evakuiert, danach wird aus einem Vorratsbehälter das Tränkmittel in den Vakuumbehälter eingeführt.

Bei der Träufelimprägnierung wird die erfindungsgemäße polymerisierbare Masse beispielsweise mittels Düsen auf das beispielsweise rotierende Substrat aufgebracht. Um ein gutes Eindringen zu gewährleisten, kann es günstig sein, die zu beträufelnden Objekte auf Temperaturen unterhalb der Härtungstemperatur zu erwärmen.

Im Anschluß an den Imprägniervorgang können die mit den erfindungsgemäßen Massen imprägnierten Substrate einer Härtung unterzogen werden. Die Härtung erfolgt radikalisch. Sie läßt sich beispielsweise durch Strahlung beschleunigen, beispielsweise durch UV-Strahlung oder Elektronenstrahlung. Bei der Wärmehärtung werden die imprägnierten Wickelgüter im Härtungsofen erwärmt, beispielsweise während 1 bis 180 Minuten auf Temperaturen im Bereich von beispielsweise 80 bis 180°C. Die Bedingungen können je nach dem zu härtendem System variieren. Die UV- oder Elektronenstrahlenhärtung kann nicht nur zur Beschleunigung eingesetzt werden, sondern auch zur Durchhärtung je nach Dicke und Transparenz der zu behandelnden Systeme. Die UV- oder Elektronenstrahlhärtung kann auch dazu dienen, zunächst die Oberflächen der imprägnierten Substrate anzuhärten, wodurch der Emissionsverlust von flüchtigen Monomeren bei der anschließenden Wärmehärtung verringert wird.

Durch die vorliegende Erfindung werden somit wärmehärtbare Massen bereitgestellt, die besonders günstig zur Fixierung von Wickelgütern, insbesondere auf dem elektrischen Gebiet geeignet sind. Die Massen ergeben eine sehr gute Haftung bei guter Elastizität und trotzdem hoher Wärmebeständigkeit. Diese Eigenschaften werden durch die Zusammensetzung der erfindungsgemäßen härtbaren Massen erzielt.

Die folgenden Beispiele dienen zur Erläuterung der Erfindung.

Vergleichsversuch A

Es wird nach dem Verfahren von Beispiel 3 der veröffentlichten DE-A-56 050 gearbeitet. Dementsprechend wird aus 205 g Monoethanolamin, 510 g Tetrahydrophthalsäureanhydrid (THPSA), 119 g Maleinsäureanhydrid (MSA) und 880 g eines Umsetzungsproduktes aus 2325 g Ricinusöl und 600 g Maleinsäureanhydrid ein ungesättigtes Polyesterimid hergestellt. Die styrolische Lösung besitzt eine Viskosität von 290 mPas bei einem Festkörper von 65,9 %.

100 Teile der styrolischen Lösung werden mit 2 Teilen Di-tert.-butylperbenzoat (50%ige Lösung im Dimethylphthalat) versetzt und in runden Aluminiumwännchen von 50 mm Durchmesser bei einer Schichtstärke von 4 mm während 3 Stunden bei 130°C ausgehärtet. Der entstandene Formkörper läßt sich leicht entformen, besitzt eine Shore-D-Härte von 55 (nach DIN 53505) und bricht bei Biegung um 90 Grad.

Ein bei 200°C im Umluftofen gelagerter Formkörper zeigt nach 3 Tagen einen Gewichtsverlust von 4,6 % und nach 10 Tagen einen Gewichtsverlust von 5,2 %, jeweils bezogen auf das Ausgangsgewicht. Bei entsprechender 250°C-Ofenlagerung betragen die Gewichtsverluste nach 3 Tagen 7,5 % und nach 10 Tagen 10,2 %.

Vergleichsversuch B

In einem 2-L-Dreihalskolben, der mit einem Rührwerk, Thermometer, Wasserabscheider und Kondensator ausgerüstet ist, werden 274 g Triethylenglykol, 222 g Trimellithsäureanhydrid (TMA), 352 g Tetrahydrophthalsäureanhydrid (THPSA), 212 g Monoethanolamin unter Stickstoff und Abspaltung von 54 g Wasser auf 160°C geheizt. Danach werden 267 g Tetrahydrophthalsäureanhydrid (THPSA) und 113 g Maleinsäureanhydrid (MSA) zugesetzt. Die Temperatur wird nun auf 205°C gesteigert und dabei gehalten, bis die Säurezahl auf 43 gefallen ist. Nach Zugabe von 60 g Xylol wird nun das restliche Reaktionswasser bei 200°C im azeotropen Kreisauf abdestilliert, bis die Säurezahl auf 25 gefallen ist. Nach Abdestillation des Xylols unter Vakuum werden bei 160°C 0,2 g Toluhydrochinon und 0,1 g p-Benzochinon eingerührt. Die Schmelze wird nun auf 100°C gekühlt und mit 600 g Styrol gelöst. Die styrolische Lösung besitzt eine Viskosität von 620 mPas bei einem Festkörper von 66,8 % (1 h 150°C).

Ein entsprechend Vergleichsversuch A hergestellter Formkörper läßt sich leicht entformen und bricht bei Biegung um 90 Grad.

| Shore-D-Härte | | 75 |
|---|---|---|
| Gewichtsverluste | 3 Tage 200°C<br>10 Tage 200°C<br>3 Tage 250°C<br>10 Tage 250°C | 4,9 %<br>6,3 %<br>6,7 %<br>9,0 % |

Vergleichsversuch C

In diesem Vergleichsversuch werden gegenüber Vergleichsversuch B in der zweiten Reaktionsstufe 267 g THPSA molar durch Adipinsäure ersetzt.

Analog Vergleichsversuch B werden 274 g Triethylenglykol, 222 g TMA, 352 g THPSA, 211 g Monoethanolamin, 254 g Adipinsäure und 113 g MSA bis zu einer Säurezahl von 25 umgesetzt und nach Stabilisierung mit 0,2 g Toluhydrochinon sowie 0,1 g p-Benzochinon in 600 g Styrol gelöst. Die styrolische Lösung besitzt eine Viskosität von 290 mPas bei einem Festkörper von 66,6 %.

Ein entsprechend Vergleichsversuch A hergestellter Formkörper läßt sich nur schwer entformen und kann ohne Bruch um 90 Grad gebogen werden. Die thermische Stabilität ist ungenügend.

| Shore-D-Härte | | 22 |
|---|---|---|
| Gewichtsverluste | 3 Tage 200°C<br>10 Tage 200°C<br>3 Tage 250°C<br>10 Tage 250°C | 8,0 %<br>10,8 %<br>12,4 %<br>größer als 15 % |

Beispiel 1

In einem, analog Vergleichsversuch B ausgestatteten, 2-L-Dreihalskolben werden 312 g PEG 1000 (Polyethylenglykol der Fa. Hoechst mit einer mittleren Molmasse von 950-1050), 65 g Neopentylglykol (NPG), 120 g Trimellithsäureanhydrid (TMA), 189 g Tetrahydrophthalsäureanhydrid (THPSA) und 114 g Monoethanolamin unter Stickstoff und Abspaltung von 50 g Wasser auf 160°C geheizt. Danach werden 142 g Tetrahydrophthalsäureanhydrid (THPSA), 61 g Maleinsäureanhydrid (MSA) und 0,05 g Toluhydrochinon zugesetzt. Die Temperatur wird nun auf 205°C gesteigert und dabei gehalten, bis die Säurezahl auf 31 gefallen ist. Nach Zugabe von 45 g Xylol wird nun das restliche Reaktionswasser bei 200°C im azeotropen Kreislauf abdestilliert, bis die Säurezahl auf 24 gefallen ist. Nach Abdestillation des Xylols unter Vakuum werden bei 160°C 0,2 g Toluhydrochinon und 0,1 g p-Benzochinon eingerührt. Die Schmelze wird nun auf 100°C gekühlt und mit 450 g Styrol gelöst. Die styrolische Lösung besitzt eine Viskosität von 360 mPas bei einem Festkörper von 66,7 %.

Ein entsprechend Vergleichsversuch A hergestellter Formkörper läßt sich nur schwer entformen und kann ohne Bruch um 90 Grad gebogen werden.

| | | |
|---|---|---|
| Shore-D-Härte | | < 15 |
| Gewichtsverluste | 3 Tage 200°C<br>10 Tage 200°C<br>3 Tage 250°C<br>10 Tage 250°C | 5,8 %<br>6,0 %<br>6,7 %<br>9,0 % |

Beispiel 2

Analog Beispiel 1 werden 380 g PEG 1000, 79 g NPG, 146 g TMA, 346 g THPSA, 139 g Monoethanolamin, 112 g MSA und 0,05 g Toluhydrochinon bis zu einer Säurezahl von 24 umgesetzt und nach Stabilisierung mit 0,2 g Toluhydrochinon sowie 0,1 g p-Benzochinon in 540 g Styrol gelöst. Die styrolische Lösung besitzt eine Viskosität von 400 mPas bei einem Festkörper von 67,1 %.

Ein entsprechend Vergleichsversuch A hergestellter Formkörper läßt sich nur schwer entformen und kann ohne Bruch um 90 Grad gebogen werden.

| | | |
|---|---|---|
| Shore-D-Härte | | 26 |
| Gewichtsverluste | 3 Tage 200°C<br>10 Tage 200°C<br>3 Tage 250°C<br>10 Tage 250°C | 5,5 %<br>5,8 %<br>6,7 %<br>8,9 % |

Beispiel 3

Analog Beispiel 1 werden 609 g PEG 1000, 32 g NPG, 117 g TMA, 185 g THPSA, 111 g Monoethanolamin, 149 g MSA und 0,05 g Toluhydrochinon bis zu einer Säurezahl von 26 umgesetzt und nach Stabilisierung mit 0,2 g Toluhydrochinon sowie 0,1 g p-Benzochinon in 540 g Styrol gelöst. Die styrolische Lösung besitzt eine Viskosität von 305 mPas bei einem Festkörper von 67,5 %.

1000 g dieser Lösung werden mit 30 g 4,4'-Diisocyanatodiphenylmethan versetzt und 3 Stunden bei 70°C gerührt. Danach ist der Isocyanatgehalt unter 0,1 % abgefallen. Die Lösung besitzt nun eine Viskosität von 840 mPas bei einem Festkörper von 68,7 %.

Ein entsprechend Vergleichsversuch A hergestellter Formkörper läßt sich nur schwer entformen und kann ohne Bruch um 90 Grad gebogen werden.

| | | |
|---|---|---|
| Shore-D-Härte | | < 15 |
| Gewichtsverluste | 3 Tage 200°C<br>10 Tage 200°C<br>3 Tage 250°C<br>10 Tage 250°C | 5,9 %<br>6,9 %<br>7,3 %<br>8,6 % |

Vergleichsversuch D

Analog Beispiel 1 der DE-A-15 70 273 werden 195 g eines Reaktionsproduktes aus Monoethanolamin und Tetrahydrophthalsäureanhydrid sowie 98 g Maleinsäureanhydrid, 45 g Trimethylolpropan und 0,1 g Hydrochinon bei 200°C umgesetzt, bis die Säurezahl auf 38 gesunken ist. Bei 90°C wird mit 106 g Styrol verdünnt. Die Lösung besitzt eine Viskosität von 5300 mPas bei einem Festkörper von 73,0 %.

Ein entsprechend Vergleichsversuch A hergestellter Formkörper bricht bei Biegung um 90 Grad.

Beispiele 4 bis 6

Die im Vergleichsversuch D hergestellte styrolische Lösung wird mit der Lösung aus Beispiel 3 in verschiedenen Mengenverhältnissen gemischt (Tabelle 1).

Zur Beurteilung der Rißanfälligkeit wird ein unter Verwendung von handelsüblichem Drahtlack hergestellter Lackdraht von 1 mm Durchmesser in 2 cm lange Drahtabschnitte geschnitten. Je 20 dieser Drahtabschnitte werden in einem runden Aluminiumwännchen von 5 cm Durchmesser mit je 0,5 bis 1 mm Abstand parallel angeordnet und mit 4 g einer der Mischungen übergossen. Die anschließende Aushärtung erfolgt während 3 Stunden bei 130°C. Beurteilt wird die Rißbildung nach Aushärtung:

1 rißfrei
2 Haarrisse
3 leichte Rißbildung
4 starke Rißbildung

Für die Beurteilung der Shore-D-Härte und Haftung werden mit den Mischungen Formkörper analog Vergleichsversuch A hergestellt. Beurteilung der Spanbarkeit mit einem Messer:

1 spanbar
2 splittert

Tabelle 1:

| Beispiel | Vergleichs-Versuch D | 4 | 5 | 6 |
|---|---|---|---|---|
| Lösung von Vergleichsversuch D (g) | 20 | 14 | 10 | 6 |
| Lösung von Beispiel 3 (g) | -- | 6 | 10 | 14 |
| Di-tert.-butylperbenzoat (g) | 0,4 | 0,4 | 0,4 | 0,4 |
| Beurteilung: | | | | |
| Rißbildung | 4 | 1-2 | 1 | 1 |
| Shore-D-Härte | 89 | 81 | 75 | 50 |
| Haftung | n.i.O. | i.O. | i.O. | i.O. |
| Span | 2 | 1-2 | 1 | 1 |

n.i.O. = nicht in Ordnung
i.O. = in Ordnung

Die Beispiele 4 bis 6 zeigen, daß die Beimischung der erfindungsgemäßen Massen zu üblichen härtbaren Systemen zu einer deutlichen Verbesserung der Eigenschaften führt.

## Patentansprüche

**1.** Härtbare, zur Fixierung von Wickelgütern geeignete Masse, enthaltend

A) 20 bis 80 Gew.-% eines oder mehrerer $\alpha,\beta$-ungesättigter Polyesterimidharze auf der Basis von ungesättigten Dicarbonsäuren, Polyolen und Imiden mit fünfgliedrigen, cyclischen Imidringen, und

B) 80 bis 20 Gew.-% eines oder mehrerer, mit den ungesattigten Polyesterimidharzen (A) copolymerisierbarer Monomerer,

sowie gegebenenfalls übliche Hilfs- und Zusatzstoffe, **dadurch gekennzeichnet,** daß die $\alpha,\beta$- ethylenisch ungesättigten Polyesterimidharze (A)

- eine OH-Zahl unter 70 und eine Säurezahl unter 50 und
- einen Urethangruppengehalt von 0 bis 0,05 pro 100 g aufweisen
- und erhältlich sind durch Umsetzung von:

a) mindestens einer $\alpha,\beta$- ethylenisch ungesättigten Dicarbonsäure, ihrem Anhydrid und/oder einem Ester davon,

b) mindestens einem Polyetherpolyol mit einem Zahlenmittel der Molmasse (Mn) von 600 bis 30000 und mit der allgemeinen Formel

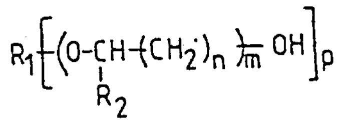

I.

worin

$R_1$ ein aliphatischer, cycloaliphatischer, heterocyclischer, aromatischer, oder aliphatisch-aromatischer Rest mit 1-20 C-Atomen, der auch O- oder N-Atome enthalten kann, ist;

$R_2$ Wasserstoff oder ein Alkylrest mit 1-4 C-Atomen ist,

n = 1 - 3,

m = eine ganze Zahl von 10 bis 390,

p = 2 - 4,

c) mindestens einer imidhaltigen Verbindung der allgemeinen Formel

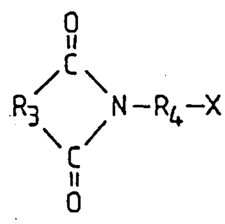

II.

oder

III

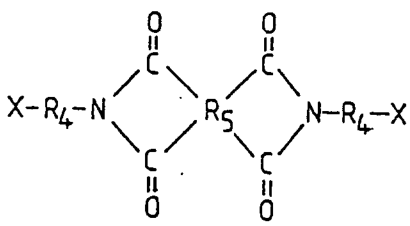

oder

IV

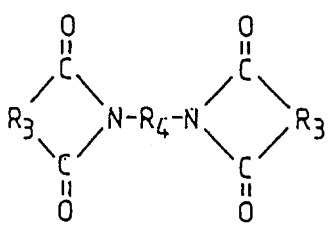

worin

$R_3$ ein aliphatischer, cycloaliphatischer oder aromatischer Rest, an dem die Carbonylgruppen in 1,2-Stellung zueinander stehen und der zumindest eine weitere reaktionsfähige Carboxyl- oder Hydroxylgruppe oder eine C = C-Doppelbindung aufweist, ist

$R_4$ ein aliphatischer, cycloaliphatischer, heterocyclischer oder aromatischer Rest mit 2-20 C-Atomen, der auch O- oder N-Atome enthalten kann, ist,

$R_5$ ein aliphatischer, cycloaliphatischer oder aromatischer Rest, an dem jeweils zwei der vier Carbonylgruppen in 1,2-Stellung zueinander stehen, ist

X eine Hydroxyl- oder Carboxylgruppe ist, sowie

d) gegebenenfalls einer oder mehrerer, von der Komponente a) unterschiedlicher Mono-, Di- oder Tricarbonsäuren,

e) gegebenenfalls einem oder mehreren von Polyetherpolyolen unterschiedlichen Alkoholen und

f) gegebenenfalls einem oder mehreren Polyisocyanaten,

wobei die Mengen der Reaktionskomponenten a) bis f) so gewählt sind, daß

- 100 g der Komponente (A) 0,05-0,40 Mol polymerisationsfähiger $\alpha,\beta$-ethylenisch ungesättigter Reste aus der Komponente (a) enthalten
- die Gesamtmenge des Polyetherpolyols (b) bezogen auf (A) 2-80 Gew.-% beträgt,
- auf jede Hydroxylgruppe des Polyetherpolyols (b) mindestens ein $\alpha,\beta$-ethylenisch ungesättigter Rest aus der Komponente (a) entfällt,
- der Gehalt an Imidstickstoff bezogen auf (A) mindestens 0,5 Gew.-% beträgt, und
- das Zahlenmittel der Molmasse der Komponente (A) 600 bis 5000 beträgt.

**2.** Härtbare Masse nach Anspruch 1, dadurch gekennzeichnet, daß sie als Hilfs- oder Zusatzstoffe einen oder mehrere Polymerisationsinhibitoren enthält.

**3.** Härtbare Masse nach Anspruch 1 oder 2, dadurch gekennzeichnet, daß sie als Hilfs- oder Zusatzstoffe einen oder mehrere Polymerisationsinitiatoren für die Strahlenhärtung und/oder thermische Härtung enthält.

**4.** Härtbare Masse nach einem der Ansprüche 1 bis 3, dadurch gekennzeichnet, daß sie als Hilfs- oder Zusatzstoffe Pigmente und/oder Füllstoffe enthält.

**5.** Verfahren zur Herstellung der härtbaren Masse nach einem der Ansprüche 1 bis 4, dadurch gekennzeichnet, daß man

- mindestens eine $\alpha,\beta$- ethylenisch ungesättigte Dicarbonsäure, ihr Anhydrid und/oder einen Ester davon (Komponente (a)) mit
- mindestens einem Polyetherpolyol, wie in Anspruch 1, Komponente (b) definiert
- mindestens eine imidhaltige Verbindung, wie in Anspruch 1, Komponente (c) definiert,
- und gegebenenfalls mindestens eine oder mehrere weitere Carbonsäuren (d)und/oder einen oder mehrere weitere Alkohole (e)
- bei erhöhter Temperatur, gegebenenfalls in Gegenwart eines oder mehrerer Veresterungskatalysatoren, in derartigen Mengen umsetzt, daß
- 100 g des erhaltenen, $\alpha,\beta$- ethylenisch ungesättigten Polyesterimids (A) 0,05-0,40 Mol polymerisationsfähiger $\alpha,\beta$- ethylenisch ungesättigter Reste aus der Komponente (a) enthalten,
- die Gesamtmenge des Polyetherpolyols (b) bezogen auf (A) 2-80 Gew.-% beträgt,
- auf jede Hydroxylgruppe des Polyetherpolyols (b) mindestens ein $\alpha,\beta$- ethylenisch ungesättigter Rest aus der Komponente (a) entfällt,
- der Gehalt an Imidstickstoff bezogen auf (A) mindestens 0,5 Gew.-% beträgt, und
- das erhaltene, $\alpha,\beta$- ethylenisch ungesättigte Polyesterimid (A) eine OH-Zahl unter 70 und eine Säurezahl unter 50, bevorzugt unter 30 aufweist,

worauf 20 bis 80 Gew.-Teile der so erhaltenen Komponente (A) in 80 bis 20 Gew.-Teilen eines oder mehrerer damit copolymerisierbarer Monomeren gelöst werden.

**6.** Verfahren nach Anspruch 5, dadurch gekennzeichnet, daß

- zunächst in einer ersten Stufe die imidgruppenhaltige Verbindung (c), gegebenenfalls in Anwesenheit mindestens eines Teils des Polyetherpolyols (b) und gegebenenfalls weiteren Alkohols (e), hergestellt wird durch Erwärmen von Tricarbonsäuren oder den Anhydriden und/oder ungesättigten cycloaliphatischen Dicarbonsäuren oder deren Anhydriden mit aliphatischen, cycloaliphatischen, heterocyclischen oder aromatischen Aminoalkoholen oder Aminocarbonsäuren,
- worauf in einer zweiten Stufe, ohne vorherige Isolierung der imidgruppenhaltigen Verbindung (c), zu dem erhaltenen Gemisch die Dicarbonsäure (a) und gegebenenfalls weitere Carbonsäuren (e), sowie gegebenenfalls die restlichen Komponenten (b) und (c), gefügt die Umsetzung unter Temperaturerhöhung weitergeführt wird.

7. Verfahren nach Anspruch 6, dadurch gekennzeichnet, daß in der zweiten Stufe ein Teil von für die Masse vorgesehenen Polymerisationsinhibitoren und nach Beendigung der zweiten Stufe deren Rest zugesetzt werden.

8. Verfahren nach einem der Ansprüche 6 und 7, dadurch gekennzeichnet, daß das erhaltene Polyesterimid (A) vor oder nach dem Lösen in der Monomerkomponente (B) mit einem oder mehreren Polyisocyanaten umgesetzt wird.

9. Verfahren zur Fixierung von Wickelgütern durch Imprägnieren von gewickelten Wickelgütern mit einer härtbaren Masse und anschließende Härtung, dadurch gekennzeichnet, daß man eine härtbare Masse nach einem der Ansprüche 1 bis 4, oder hergestellt nach einem der Ansprüche 5 bis 8, verwendet, und die Härtung durch UV-Strahlung, Elektronenstrahlung und/oder Erwärmen durchführt.

10. Verwendung der härtbaren Masse nach einem der Ansprüche 1 bis 4 oder hergestellt nach einem der Ansprüche 5 bis 8 zur Fixierung von Wickelgütern und zur Imprägnierung von Geweben.

11. Verwendung der härtbaren Masse nach einem der Ansprüche 1 bis 4 oder hergestellt nach einem der Ansprüche 5 bis 8 zur Fixierung von Wickelgütern auf dem elektrischen Sektor.